Europäisches Patentamt

(19) European Patent Office

Office européen des brevets

(11) **EP 0 775 049 B1**

(12) **EUROPEAN PATENT SPECIFICATION**

(45) Date of publication and mention
of the grant of the patent:
**15.12.1999 Bulletin 1999/50**

(21) Application number: **95927748.4**

(22) Date of filing: **11.08.1995**

(51) Int. Cl.$^6$: **B29C 59/10**, B29C 71/00

(86) International application number:
**PCT/FI95/00426**

(87) International publication number:
**WO 96/05045 (22.02.1996 Gazette 1996/09)**

(54) **SELF-ADHESIVE FILM AND PROCEDURE FOR ITS MANUFACTURE**

SELBSTKLEBENDE FOLIE UND IHRE HERSTELLUNG

FILM AUTO-ADHESIF ET PROCEDE POUR LE FABRIQUER

(84) Designated Contracting States:
**AT BE CH DE DK ES FR GB IE IT LI NL SE**

(30) Priority: **12.08.1994 FI 943721**

(43) Date of publication of application:
**28.05.1997 Bulletin 1997/22**

(73) Proprietor: **Emfitech Oy**
**40800 Vaajakoski (FI)**

(72) Inventors:
• **KIRJAVAINEN, Kari**
**FIN--02320 Espoo (FI)**
• **KORHONEN, Keijo**
**FIN-70340 Kuopio (FI)**
• **KRÖGER, Jyrki**
**FIN-70780 Kuopio (FI)**

• **RÄISÄNEN, Lasse**
**FIN-90500 Oulu (FI)**

(74) Representative:
**Järveläinen, Pertti Tauno Juhani et al**
**Oy Heinänen Ab,**
**Annankatu 31-33 C**
**00100 Helsinki (FI)**

(56) References cited:
**WO-A-94/08779          US-A- 4 239 973**

• **STN INTERNATIONAL, File CAPLUS, CAPLUS**
**Accession No. 1985:185870, WU, ZONGHAN et**
**al., "Measurement of the Surface and the Inner**
**Charge and Their Division in Corona-Charged**
**Polypropylene Film"; & NANJING**
**GONGXUEYUAN XUEBAO, (1984), (3), 121-9.**

## Description

The present invention relates to a film of dielectric material, self-adhesive by virtue of an electrostatic force, as defined in the preamble of claim 1 and to a process for manufacturing a film of dielectric material, self-adhesive by virtue of an electrostatic force, according to the preamble of claim 6. It is known that charges are formed on the surface of dielectric films when the films are rubbed or reeled or when the films are manufactured by previously known continuous manufacturing methods. The electric charges thus produced may generate electrostatic forces and the films may e.g. adhere to different surfaces. However, such electrostatic forces of attraction are very weak and the charges can easily disappear e.g. due to humidity, so the action of these forces may be of a very short duration. When this is the case, the films will not set straight on a surface and they are easily detached e.g. by air current.

Previously known are also electrets produced from solid material in which charges are generated in the film surface structure by subjecting it to a DC corona treatment. Such electret films can be utilized in the first place in various detector applications, such as e.g. the electret microphone.

Producing a powerful charge penetrating deep into a solid film material is very difficult because it is not possible to incease the surface potential of such film material to a sufficiently high level during the corona treatment (charging) because of the leakage current flowing through the film. A leakage current flows because in solid material the resistance of the material is reduced as a function of voltage.

A further known method is to manufacture e.g. from polypropylene a bubble or cavitated film which contains small, preferably flat gas bubbles placed in an overlapping arrangement inside the film. Due to the whiteness of the film resulting from the bubble structure, such film is an excellent material for printing. This kind of white film is generally used e.g. as packaging material.

In a film containing flat gas bubbles, resistivity is not reduced in the gas bubbles and the leakage current is not increased with voltage. Therefore, it is possible during charging to achieve a high electric field, e.g. in the range 100 - 200 MV/m, which in turn produces partial discharges in the bubbles contained in the film. The object of the present invention is to achieve a completely new type of film made self-adhesive by an electrostatic force, a film whose strong adhesion is based on a large unipolar charge created inside the film as explained above. This object is achieved according to the invention by the film as defined in claim 1 and by the process as defined in claim 6. Particular embodiments of the invention are the subject of the dependent claims. The most significant advantage provided by this type of self-adhesive film is that no separate adhesive substances, such as glue, or fixing tools are needed to make it adhere to a surface.

With the film of the invention, a very good adhesion is achieved. Moreover, the film of the invention retains its charge for a very long time, typically several years. In addition, because of the charge inside the film, an electrostatic force is active on both sides of the film, which means that films will stick together very firmly. This makes it possible to place several films, typically 15 - 30 pcs and even as many as 50 pcs, on top of each other like the leaves of a so-called flip chart. It is also possible to attach other materials, such as paper, onto the film.

The film of the invention sets straight and neat onto a surface. The film can resist e.g. air currents, humidity and heat without being detached from the surface. In addition, it adheres well even on a rough surface.

To produce a self-adhesive bubble film as provided by the invention, a bubble film made of a plastic material, e.g. polypropylene, of a thickness of a few tens of $\mu$m, e.g. 50 $\mu$m, is charged by means of a very intensive electric field (e.g. in the range of 100 - 200 MV/m). During charging, partial discharges occur in the air bubbles in the film, and the charges are injected into the plastic material of the film. Due to the large resistivity of the bubble structure and the film material, the charges are well retained within the film. As a result, a film is obtained which has a high net charge and whose strong adhesion is based on a large unipolar charge inside the film.

Because of the powerful net charge, such a film is especially applicable as a self-adhesive film which can be used e.g. as a medium of visual information e.g. by printing the information directly on the film. As the charge inside the film generates an adhesion force on both sides of the film, information printed on paper or other light material can be attached to the film. It is also possible to pile films on top of each other e.g. on a wall to form a so-called flip chart.

One can also cut holes or patterns of arbitrary shape in the film, so it can be used e.g. as an anti-glare barrier in automobiles or for various decorative purposes.

Furthermore, it is possible to create charges of opposite sign inside the film so that certain areas of the film contain a positive charge and certain other areas a negative charge, e.g. so that positively and negatively charged strips or areas of any shape placed side by side are formed in the film. When the positive and negative charges are equal, the net charge of the film is zero and the film can also be used between metal sheets without generating in the metal sheets voltage differences according to the capacitance law

$$\Delta U = \frac{Q}{\Delta C}$$

where ΔU is the change in voltage, Q is the charge of the film and ΔC is the change in capacitance occurring when the sheets are being detached or piled up. The change in capacitance may be of the order of 1 $\mu F/m^2$ and, without the use of strips, the voltage differences thus produced may be several kV and therefore even dangerous to life. One of the applications made possible by such a film is its use a self-adhesive protective film on steel and sheet metal plates.

To improve its adhesion and printability, the bubble film may also be advantageously subjected to an AC corona treatment. Possible uses of the film may be further increased by providing one side of the film with a coat of slightly sticker-like material, which allows the adhesion of the film to be adjusted both via AC corona treatment and by adjusting the intensity of the charging process described above.

Further, the amount of net charge formed inside the film can be adjusted by doping the film with charge binding additives, such as ferrochloride, which generally contain impurities which act as charge centres.

It is obvious to a person skilled in the art that different embodiments of the invention are not restricted to the example described above but that they may instead be varied within the scope of the claims presented below.

## Claims

1. Film of dielectric material, self-adhesive by virtue of an electrostatic force, which film contains gas blisters preferably of a flat shape, **characterized** in that, to achieve an adhesive quality of the film, the film is given a large internal unipolar charge, which is created by charging the film by means of an electric field intensive enough to produce partial discharges in the gas blisters and to cause the charges to move into the dielectric material of the film.

2. Film as defined in claim 1, **characterized** in that the film is coated with a slightly adhesive, sticker-like layer.

3. Film as defined in claim 1 or 2, **characterized** in that, to adjust the adhesion of the film, one or both of its surfaces are subjected to an AC corona treatment.

4. Film as defined in claim 1, 2 or 3, **characterized** in that, to increase the net charge created inside the film, the film is doped with charge binding additives, such as ferrochloride.

5. Film as defined in any one of the preceding claims, **characterized** in that certain areas of the film contain a positive charge while the other areas have a negative charge.

6. Process for manufacturing a film of dielectric material self-adhesive by virtue of an electrostatic force, said film containing gas blisters preferably of a flat shape, **characterized** in that, to achieve an adhesive quality of the film, the film is charged by means of an electric field intensive enough to produce partial discharges in the gas blisters and to cause the charges to move into the dielectric material of the film, creating a large unipolar charge inside the film.

7. Process as defined in claim 6, **characterized** in that the film is subjected to an AC corona treatment.

8. Process as defined in claim 6 or 7, **characterized** in that the adhesion of the film is adjusted by adjusting the intensity of the AC corona treatment or the charging or both.

## Patentansprüche

1. Folie aus dielektrischem Material, selbstklebend mittels einer elektrostatisehen Kraft, welche Folie Gasblasen vorzugsweise von flacher Form enthält, **dadurch gekennzeichnet,** daß zur Erzielung einer Klebequalität der Folie der Folie eine große innere unipolare Ladung gegeben wird, welche durch Aufladen der Folie mittels eines elektrischen Feldes erzeugt wird, das ausreichend intensiv ist, um partielle Entladungen in den Gasblasen zu erzeugen und um die Ladungen zu veranlassen, sich in das dielektrische Material der Folie zu bewegen.

2. Folie wie in Anspruch 1 beansprucht, **dadurch gekennzeichnet,** daß die Folie mit einer leicht adhesiven, klebähnlichen Schicht beschichtet ist.

3. Folie wie in Anspruch 1 oder 2 beansprucht, **dadurch gekennzeichnet,** daß zur Einstellung der Adhesion der Folie eine oder beide ihrer Oberflächen einer Wechselstrom-Corona-Behandlung ausgesetzt werden.

4. Folie wie in Anspruch 1, 2 oder 3 beansprucht, **dadurch gekennzeichnet,** daß zur Erhöhung der innerhalb der Folie erzeugten Nettoladung die Folie mit ladungsbindenden Zusätzen dotiert wird, beispielsweise Eisenchlorid.

5. Folie wie in einem der vorstehenden Ansprüche beansprucht, **dadurch gekennzeichnet,** daß bestimmte Bereiche der Folie eine positive Ladung enthalten, während andere Bereiche eine negative Ladung besitzen.

6. Verfahren zur Herstellung einer Folie aus dielektrischem Material, das aufgrund einer elektrostatischen Kraft selbstklebend ist, wobei die Folie Gasblasen von vorzugsweise flacher Form enthält, **dadurch gekennzeichnet, daß** zur Erzielung einer Adhesivqualität der Folie die Folie mittels eines elektrischen Feldes aufgeladen wird, das ausreichend intensiv zur Erzeugung partieller Entladungen in den Gasblasen ist und die Ladungen veranlaßt, sich in das dielektrische Material der Folie zu bewegen und eine große unipolare Ladung innerhalb der Folie zu erzeugen.

7. Verfahren wie in Anspruch 6 beansprucht, **dadurch gekennzeichnet, daß** die Folie einer Wechselstrom-Corona-Behandlung ausgesetzt wird.

8. Verfahren wie in Anspruch 6 oder 7 beansprucht, **dadurch gekennzeichnet, daß** die Adhesion der Folie durch Einstellen der Intensität der Wechselstrom-Corona-Behandlung oder der Aufladung oder durch beides eingestellt wird.

**Revendications**

1. Film en matériau diélectrique, auto-adhésif par l'intermédiaire d'une force électrostatique, lequel film contient des poches de gaz, de préférence d'une forme plate, caractérisé en ce que pour obtenir une qualité adhésive du film, on applique sur le film une charge unipolaire interne importante, laquelle est créée en chargeant le film au moyen d'un champ électrique suffisamment intensif pour produire des décharges partielles dans les poches de gaz et pour obliger les charges à se déplacer à l'intérieur du matériau diélectrique du film.

2. Film selon la revendication 1, caractérisé en ce que le film est recouvert d'une couche légèrement adhésive comme pour une étiquette adhésive.

3. Film selon la revendication 1 ou 2, caractérisé en ce que pour ajuster l'adhésion du film, l'une de ses surfaces ou les deux sont exposées à un traitement par effet corona à courant alternatif.

4. Film selon la revendication 1, 2 ou 3, caractérisé en ce que pour augmenter la charge nette créée à l'intérieur du film, le film est dopé avec des additifs de fixation de charges tels que le ferrochlorure.

5. Film selon l'une quelconque des revendications précédentes, caractérisé en ce que certaines zones du film contiennent une charge positive tandis que les autres zones comportent une charge négative.

6. Procédé de fabrication d'un film en matériau diélectrique auto-adhésif par l'intermédiaire d'une force électrostatique, ledit film contenant des poches de gaz, de préférence d'une forme plate, caractérisé en ce que pour obtenir une qualité adhésive du film, le film est chargé au moyen d'un champ électrique suffisamment intensif pour produire des décharges partielles dans les poches de gaz et pour obliger les charges à se déplacer à l'intérieur du matériau diélectrique du film, créant une charge unipolaire importante à l'intérieur du film.

7. Procédé selon la revendication 6, caractérisé en ce que le film est exposé à un traitement par effet corona à courant alternatif.

8. Procédé selon la revendication 6 ou 7, caractérisé en ce que l'adhésion du film est ajustée en ajustant l'intensité du traitement par effet corona a courant alternatif ou la charge, ou les deux.